Europäisches Patentamt

European Patent Office

Office européen des brevets

(19)

(11) Numéro de publication : **0 467 740 A1**

# (12) DEMANDE DE BREVET EUROPEEN

(21) Numéro de dépôt : **91401855.1**

(22) Date de dépôt : **04.07.91**

(51) Int. Cl.⁵ : **B60J 7/08**

(30) Priorité : **16.07.90 FR 9009060**

(43) Date de publication de la demande :
**22.01.92 Bulletin 92/04**

(72) Inventeur : **Ouvrard, Gaston**
**18 rue de Bellefeuille**
**F-79300 Bressuire (FR)**
Inventeur : **Jeuffray, Jean-Marie**
**1 rue des Coulies, Terves**
**F-79300 Bressuire (FR)**

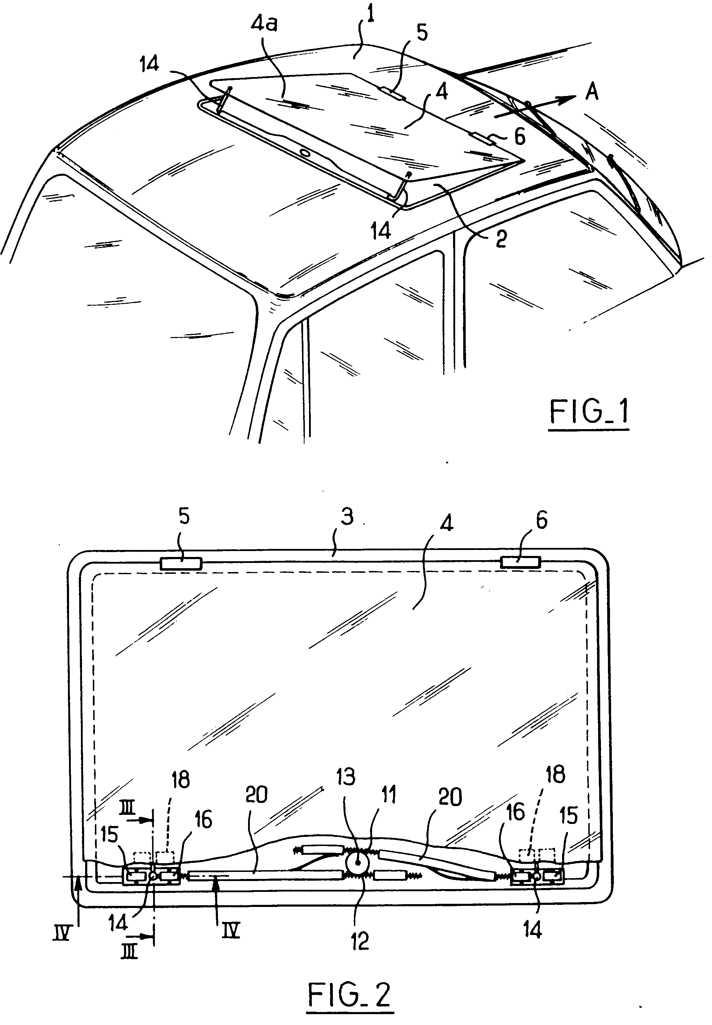

$\underline{FIG.2}$

La présente invention concerne un panneau pivotant pour baie de véhicule et plus particulièrement un toit basculant formant aérateur de l'habitacle pour véhicule automobile.

La plupart des baies basculantes possèdent un panneau qui est articulé par un bord sur un cadre bordant l'ouverture ménagée dans la carrosserie du véhicule et qui est relié au bord opposé de ce cadre par deux jeux de leviers. En particulier pour les ouvertures de toit, ces leviers sont commandés par une poignée centrale.

Cette disposition connue ne se prête pas de manière simple à la motorisation de la commande de l'ouverture ou de la fermeture de ce type de baies.

La présente invention entend proposer un dispositif de baie ouvrante dont les organes de commande sont beaucoup plus simples et peuvent être directement accouplés à l'arbre de sortie d'un moteur d'entraînement.

A cet effet, l'invention a donc pour objet un dispositif de baie pivotante pour véhicule comportant un cadre de fixation du dispositif au bord de l'ouverture ménagée dans la carrosserie du véhicule, un panneau articulé par l'un de ses bords au bord correspondant du cadre et mobile en pivotement par rapport à ce cadre entre une position de fermeture sensiblement dans le plan du cadre et une position d'ouverture inclinée sur ce plain, et des moyens pour manoeuvrer le panneau de l'une vers l'autre de ses positions.

Selon l'une des caractéristiques principales de l'invention, les moyens de manoeuvre du panneau comportent au moins un câble-crémaillère circulant le long d'au moins une partie du cadre, l'extrémité de ce câble étant attelée au panneau dans une zone voisine de son bord opposé à celui articulé au cadre tandis qu'un organe de renvoi est prévu sur le cadre pour orienter la partie terminale du câble dans une direction sensiblement perpendiculaire au plan du cadre.

D'autres caractéristiques et avantages ressortiront de la description ci-après sans caractère limitatif, d'un exemple de réalisation de l'invention dans son application aux toits ouvrants de véhicule automobile.

Il sera fait référence aux dessins annexés dans lesquels :

– la figure 1 est une vue générale d'un pavillon de véhicule équipé d'un toit ouvrant selon l'invention,
– la figure 2 est une vue de dessus schématique du toit ouvrant selon l'invention,
– la figure 3 est une coupe agrandie selon la ligne III-III de la figure 2,
– la figure 4 est une coupe agrandie selon la ligne IV-IV de la figure 2.

Le pavillon 1 d'un véhicule équipé d'un toit ouvrant possède une ouverture 2 sur le bord de laquelle un cadre 3 en deux parties 3a et 3b est monté. Ce cadre est équipé, de manière connue, de tous les éléments aptes à recevoir un panneau 4 qui puisse être ouvert ou fermé, et qui puisse en position fermée, assurer l'étanchéité de l'obturation de l'ouverture interne du cadre. Dans le cas de l'invention le panneau 4 est articulé sur le cadre 3 au moyen de deux articulations 5 et 6 situées sur le bord avant du cadre et du panneau (dans le sens A d'avancement du véhicule).

Le cadre 3 porte également tous les accessoires permettant d'assurer l'étanchéité entre le cadre et le pavillon (joint 7), entre le panneau 4 et le cadre (joint 8) et permettant d'assurer les finitions esthétiques de la découpe de la garniture 9 du pavillon (baguette 10).

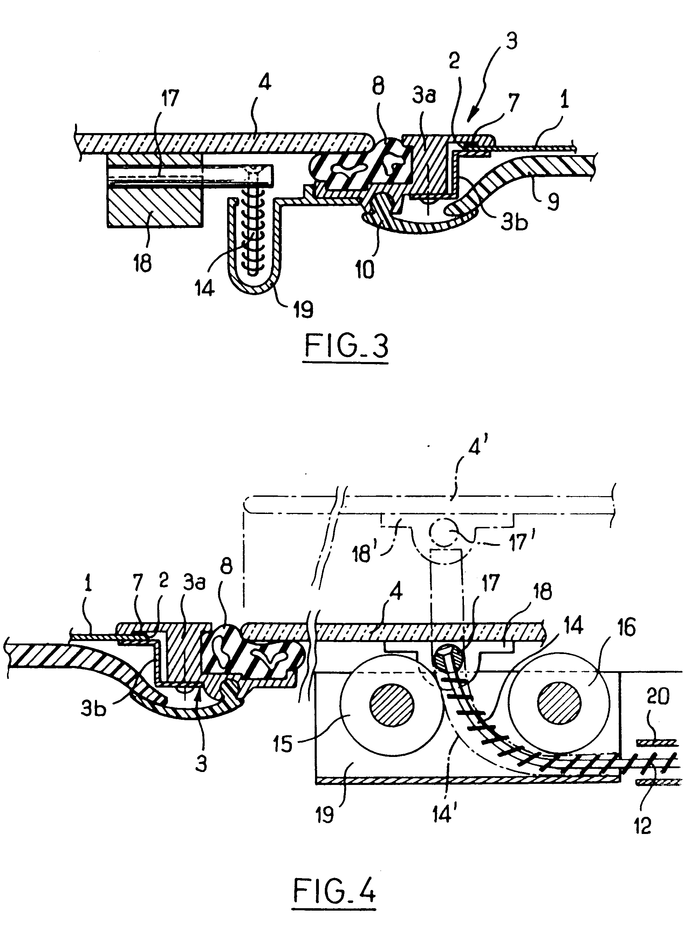

L'invention concerne les moyens de manoeuvre du panneau 4 autour de ses articulations 5 et 6. Ces moyens sont représentés schématiquement, dans leur ensemble, à la figure 2. Il s'agit de deux câbles-crémaillères 11 et 12, connus en eux-mêmes, comprenant une âme relativement flexible équipée en surface d'une hélice saillante qui peut coopérer avec une roue dentée 13. Ces câbles sont guidés dans des gaines tubulaires ou autres solidaires du cadre 3, dans lesquelles ils peuvent donc coulisser. Compte tenu de leur souplesse, ces câbles peuvent coulisser le long de trajets sinueux ou possédant certaines portions courbes. Ainsi, comme on le voit sur la figure 4, l'extrémité 14 du câble 12 est orientée en direction du panneau 4 alors que le reste de sa longueur s'étend dans un plan à peu près parallèle au plan du panneau 4 ou de celui du cadre 3.

La courbure du câble est obtenue en guidant celui-ci entre deux galets fixes 15 et 16 écartés l'un de l'autre d'une longueur compatible avec le rayon de courbure minimum admissible par le câble.

Cette extrémité 14 est attelée au panneau 4 au voisinage d'un angle arrière par l'intermédiaire d'un axe 17 qui tourillonne dans un palier 18 fixé sur la face inférieure du panneau 4. L'extrémité 14 du câble 12 est implantée perpendiculairement à l'axe 17. L'articulation 17, 18 du câble 12 au panneau 4 permet de prendre en compte la variation de l'inclinaison de l'extrémité 14 selon que le panneau est dans sa position de fermeture (en trait plein sur les figures) ou dans sa position d'ouverture 4' en trait mixte sur la figure 4, où les éléments déjà décrits portent les mêmes références augmentées du signe prime en position d'ouverture.

Les galets 15 et 16 sont montés à rotation dans une gouttière 19 solidaire du cadre 3. Le fond de cette gouttière guide le câble 12 dans sa partie d'extrémité, alors qu'il est guidé par tout moyen connu (par exemple un tube 20) également fixe par rapport au cadre 3, entre la roue dentée 13 et la gouttière 19.

Les mêmes dispositions de guidage et d'attelage sont mises en oeuvre pour le câble 11.

On comprend aisément de ce qui précède, qu'en faisant tourner la roue dentée 13 dans le sens des aiguilles d'une montre, on pousse les câbles 11 et 12 ce qui a pour effet de soulever le bord du panneau 4a au voisinage duquel les extrémités 14 des câbles sont attelées.Le panneau est donc incliné comme représenté à la figure 1.

En manoeuvrant la roue 13 dans l'autre sens, on abaisse le panneau pour le plaquer contre le joint 8 du cadre, comme représenté aux figures 3 et 4.

Dans le mode de réalisation représenté, on a placé la roue 13 au voisinage de la partie médiane du bord arrière du cadre 3. Cette roue est montée tournante dans un support solidaire de ce cadre 3. Son entraînement en rotation peut être réalisé par une manivelle accessible de l'intérieur de l'habitacle ou un moteur électrique non représentés. Il sera avantageux de prévoir entre la roue et son organe d'entrainement une transmission non réversible (par exemple une transmission du genre roue et vis sans fin) de sorte que n'importe quelle position prise par le panneau soit une position stable auto-verrouillée. Cet auto-verouillage est en général obtenu simplement par le moteur d'entrainement, dans la version motorisée de l'invention.

L'emplacement de la roue 13 tel que représenté à la figure 2 n'est pas limitatif. C'est celui qui permet de mettre en oeuvre des câbles de longueur minimale. Il est cependant possible de disposer cette roue au centre du bord avant du cadre, les câbles empruntant un trajet plus long le long du cadre entre cette roue et leur point d'attelage au panneau.

L'invention n'est pas limitée à la réalisation représentée. C'est ainsi que les galets 15 et 16 peuvent être remplacés par un tronçon de gaine courbe. Cette solution est cependant moins avantageuse que celle avec galets qui, comme le montre la figure 4, autorise une variation dans la courbure de l'extrémité 14 du câble. La tension du câble à la fermeture du toit est mieux transmise au panneau dans le cas des galets. Avec une gaine courbe, une partie de la tension du câble est encaissée par la gaine au lieu d'être appliquée au panneau, ce qui a pour conséquence un maintien moins ferme du panneau en position de fermeture.

On notera également que l'articulation représentée du câble au panneau peut être remplacée par une articulation à rotule.

L'invention peut mettre en oeuvre tout type de câble crémaillère, que celui-ci soit en acier ou en matière plastique ou composite comportant une âme souple et un relief périphérique hélicoïdal.

Enfin, les dispositions de l'invention trouvent des applications autres que celle décrite ci-dessus relative à un toit ouvrant. En particulier, elles peuvent être mises en oeuvre pour la commande en basculement de toute baie ou panneau destiné à obturer une ouverture ménagée dans la carrosserie d'un véhicule (routier ou ferroviaire) et à être entrebaillé pour constituer par exemple un aérateur. Il peut s'agir d'impostes basculantes, de fenêtres latérales ou de lunettes de custodes dans ces véhicules.

## Revendications

1. Dispositif de panneau pivotant pour baie de véhicule comportant un cadre (3) de fixation du dispositif au bord (2) de l'ouverture ménagée dans la carrosserie (1) du véhicule, un panneau (4) articulé par l'un de ses bords au bord correspondant du cadre (3) et mobile en pivotement par rapport à ce cadre (3) entre une position de fermeture sensiblement dans le plan du cadre (3) et une position d'ouverture inclinée sur ce plan, et des moyens pour manoeuvrer le panneau de l'une vers l'autre de ces positions, caractérisé en ce que les moyens de manoeuvre du panneau comportent au moins un câble-crémaillère (11,12) circulant le long d'au moins une partie du cadre (3), l'extrémité (14) de ce câble étant attelée au panneau (4) dans une zone voisine de son bord (4a) opposé à celui articulé au cadre (3) tandis qu'un organe de renvoi (15,16) est prévu sur le cadre pour orienter la partie terminale (14) du câble (12) dans une direction sensiblement perpendiculaire au plan du cadre (3).

2. Dispositif selon la revendication 1, caractérisé en ce qu'il comporte deux câbles-crémaillères (11,12) symétriques l'un de l'autre par rapport à un plan médian perpendiculaire au bord articulé, l'extrémité (14) de chaque câble (11,12) étant attelée au voisinage d'un angle du panneau (4).

3. Dispositif selon la revendication 1 ou la revendication 2, caractérisé en ce qu'il comporte un dispositif d'entrainement des câbles-crémaillères comprenant une roue dentée (13) montée à rotation sur le cadre (3) et engrénant avec les câbles (11,12) et des moyens de blocage en rotation de cette roue.

4. Dispositif selon la revendication 3, caractérisé en ce que la roue dentée (13) est disposée au centre du côté du cadre ( 3) opposé à celui auquel est articulé le panneau (4).

5. Dispositif selon l'une des revendications précédentes caractérisé en ce que les moyens d'attelage de l'extrémité (14) d'un câble-crémaillère (11,12) au panneau (4) comportent une articulation (17,18).

FIG_1

FIG_2

FIG_3

FIG_4

**Office européen des brevets**

# RAPPORT DE RECHERCHE EUROPEENNE

Numero de la demande

EP 91 40 1855

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 316 473 (AISIN SEIKI) <br> * page 8, ligne 10 - ligne 36; figures 2,4 * <br> --- | 1 | B60J7/08 |
| A | FR-A-2 471 876 (KARROSSERIEWERKE WEINSBERG) <br> * page 7, ligne 16 - ligne 28; figure 3 * <br><br> ----- | 1 | |
| | | | **DOMAINES TECHNIQUES RECHERCHES (Int. Cl.5)** <br><br> B60J |

Le présent rapport a été établi pour toutes les revendications

| Lieu de la recherche | Date d'achèvement de la recherche | Examinateur |
|---|---|---|
| LA HAYE | 24 OCTOBRE 1991 | FOGLIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

7